Europäisches Patentamt

European Patent Office

Office européen des brevets

(11) Veröffentlichungsnummer: **0 484 705 A1**

## (12) EUROPÄISCHE PATENTANMELDUNG

(21) Anmeldenummer: **91117608.9**

(22) Anmeldetag: **16.10.91**

(51) Int. Cl.5: **A22C 11/08**

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

(30) Priorität: **03.11.90 DE 4035012**

(43) Veröffentlichungstag der Anmeldung:
**13.05.92 Patentblatt 92/20**

(84) Benannte Vertragsstaaten:
**AT CH DE ES FR GB IT LI NL**

(71) Anmelder: **VEMAG Maschinenbau GmbH**
**Weserstrasse 32**
**W-2810 Verden (Aller)(DE)**

(72) Erfinder: **Markwardt, Klaus**
**Alter Ringwall 17**
**W-2810 Verden(DE)**

(74) Vertreter: **Eisenführ, Speiser & Strasse**
**Martinistrasse 24**
**W-2800 Bremen 1(DE)**

(54) **Vorrichtung zum Abfüllen von Massen, insbesondere Wurst- und Fleischmassen.**

(57) Eine Vorrichtung zum Abfüllen von Massen, insbesondere Wurst- und Fleischmassen, weist eine Einfülleinrichtung (8) zum Einfüllen der Masse (22), einen Füllzylinder (1), der mit Masse (22) von der Einfülleinrichtung (8) her beschickbar ist und an dessen einem Ende ein einen geringeren Querschnitt als der Füllzylinder (1) aufweisender Füllstutzen (2) zur Abgabe der Masse angeordnet ist, und einen Kolben (4) auf, der aus einer Endstellung vom anderen Ende des Füllzylinders (1) her in diesen bewegbar ist, um die Masse aus dem Füllzylinder durch den Füllstutzen (2) herauszudrücken. Die Einfülleinrichtung (8), der Füllzylinder (1) und der Kolben (4) sind ortsfest zueinander angeordnet. Eine Fördereinrichtung (6) ist vorgesehen, die die Einfülleinrichtung (8) mit dem Füllzylinder (1) derart verbindet, daß die Masse (22) von der Einfülleinrichtung (8) in den Füllzylinder (1) gefördert wird, wenn sich der Kolben (4) im wesentlichen in seiner Endstellung befindet.

Fig. 1

EP 0 484 705 A1

Die Erfindung betrifft eine Vorrichtung zum Abfüllen von Massen, insbesondere Wurst- und Fleischmassen, mit
- einer Einfülleinrichtung zum Einfüllen der Masse,
- einem Füllzylinder, der mit Masse von der Einfülleinrichtung her beschickbar ist,
- einem Füllstutzen zur Abgabe der Masse, und mit
- einem Kolben, der von einer Endstellung vom ersten Ende des Füllzylinders in diesen hineinbewegbar ist, um die Masse aus dem zweiten Ende des Füllzylinders durch den Füllstutzen herauszudrücken.

Kontinuierlich arbeitende Vorrichtungen zum Abfüllen von Wurst- und Fleischmasse sind in Form von Vakuumfüllmaschinen seit langem bekannt und haben dank hoher Abfülleistungen, guter Portioniergenauigkeit und guter Entlüftung der Masse eine weite Verbreitung gefunden.

Es ist bekannt, daß mit derartigen kontinuierlichen Vakuumfüllmaschinen Probleme beim Abfüllen von schmierempfindlichem Brät entstehen können. Beispielsweise beim Verarbeiten von Rohwurst wird besonderer Wert auf ein gutes und verschmierungsfreies Schnittbild bzw. eine homogene Verteilung der Fleisch- und Fettstücke gelegt. Bei den bekannten kontinuierlichen Vakuumfüllmaschinen wirken sich jedoch die insbesondere durch Umlenkungen in den Förderwerken entstehenden mechanischen Beanspruchungen nachteilig auf das Abfüllergebnis aus.

Aus diesem Grunde wird bisher für schmierempfindliches Brät eine Vorrichtung gemäß der eingangs genannten Art bevorzugt, die nach dem Prinzip des Kolbenfüllers arbeitet. Der Füllzylinder kann vertikal mit obenliegendem Füllstutzen oder horizontal angeordnet sein. Das zweite Ende des Füllzylinders ist durch einen Deckel verschließbar, an dem der Füllstutzen fest angebracht ist. Die Beschickung der Füllzylinder erfolgt bei in die Endstellung gefahrenem Kolben. Dabei wird der Deckel vom zweiten Ende abgenommen und das Brät durch das zweite Ende in den Füllzylinder eingefüllt, was entweder manuell oder mit Hilfe einer Einfülleinrichtung durchgeführt wird. Die Verlustzeiten für die Befüllung sind dabei erheblich, und die bekannte Vorrichtung kann daher nur mit großen Unterbrechungen betrieben werden. Aufgrund dieses diskontinuierlichen Betriebes ist der Durchsatz und die Fülleistung sehr gering, so daß sich eine solche Vorrichtung für große Fülleistungen nicht eignet.

Für große Fülleistungen ist eine Füllanlage entwickelt worden, die mit einer Vielzahl von Füllzylindern arbeitet. An einer separaten Beladestation, an der eine Einfüllvorrichtung vorgesehen ist, wird vakuumiertes Brät in den an beiden Stirnseiten offenen Füllzylinder gepreßt, welcher horizontal angeordnet ist. Der an beiden Stirnseiten offene, mit Brät gefüllte Zylinder wird nach der Befüllung mit Transporteinrichtungen zu einer Abfüllstation befördert, bei der das Brät durch einen Kolben aus dem Füllzylinder in einen Füllstutzen gepreßt wird. Bei dieser bekannten Anlage entsteht zwar eine gewisse Verlustzeit durch den Zylinderwechsel an der Abfüllstation, jedoch wird diese Verlustzeit aufgrund des Fließband-Betriebes durch das vorherige Befüllen an der Beladestation zu einem Teil kompensiert.

Diese bekannte Füllanlage ist jedoch relativ aufwendig und somit teuer, so daß sie vorwiegend nur für große Industriebetriebe geeignet ist. die Anlage benötigt ferner viel Platz, welcher insbesondere in kleinen Räumen nicht immer vorhanden ist. Da immer ganze Füllzylinder gefüllt werden müssen, ergeben sich häufig große, nicht abfüllbare Restmengen. Außerdem sind der Sortenwechsel und die Reinigung sehr zeitraubend.

Verfahrenstechnisch sind dieser bekannten Anlage durch die Konsistenz des Brätes Grenzen gesetzt. Bedingt durch die an den Stirnseiten offenen Zylinder darf das Brät durch Schwerkrafteinfluß nicht anfangen zu fließen. Bei dem Wechsel der Füllzylinder müssen die Brätflächen luftfrei und plan gegeneinander gebracht werden, da sonst unerwünschte Lufteinschlüsse in der fertig gefüllten Wurst unvermeidbar sind.

Aus der DE-PS 28 43 624 ist eine Abfüllvorrichtung bekannt, die ebenfalls mit horizontalen Füllzylindern arbeitet. Wie bei der zuvor beschriebenen Anlage werden auch hier die Füllzylinder zwischen einer Beladungsstation und einer Abfüllstation hin- und hertransportiert. Jedoch ist bei dieser bekannten Vorrichtung der Abstand zwischen der Beladungsstation und der Abfüllstation geringer, wodurch die Transportzeiten verkürzt werden können. Dies wird erreicht durch eine Zwei-Füllzylinder-Wechselautomatik. Ein weiterer Vorteil dieser Vorrichtung besteht darin, daß sie hygienischer als die zuvor beschriebene Anlage arbeitet, da die gefüllten Zylinder nicht ungeschützt transportiert werden.

Jedoch benötigt auch diese Vorrichtung, welche ebenfalls nach Art einer Anlage aufgebaut ist, vergleichsweise viel Platz. Außerdem weist auch diese bekannte Vorrichtung die gleichen verfahrenstechnischen Einschränkungen wie die zuvor beschriebene Anlage auf. Auch hier müssen während des Füllzylinderwechsels die Brätflächen luftfrei und plan gegeneinander gebracht werden. Gleichfalls sind bei dieser bekannten Anlage der Sortenwechsel und die Reinigung ebenfalls sehr zeitraubend. Auch besteht hier das Problem, daß nicht unerhebliche, nicht abfüllbare Restmengen aus dem gleichen Grunde wie bei der zuvor beschriebenen Anlage anfallen.

Aufgabe der Erfindung ist es, eine Vorrichtung der eingangs genannten Art derart zu verbessern, daß der Aufwand und die Herstellungskosten sowie der benötigte Platzbedarf verringert, die Verlustzeiten reduziert und die zuvor aufgeführten verfahrenstechnischen Nachteile des Standes der Technik vermieden werden können. Insbesondere soll die erfindungsgemäße Vorrichtung für die Verwendung in kleineren Betrieben geeignet, einfach zu reinigen und dabei hinsichtlich Sortenwechsel und Plazierbarkeit im Produktionsraum flexibel sein und ein gutes Füllergebnis weitgehend unabhängig von der Bratkonsistenz, d.h. sogar bei fließenden Bräten erzielen, ohne daß nennenswerte, nicht abfüllbare Restmengen anfallen.

Diese Aufgabe wird bei einer Vorrichtung der eingangs genannten Art dadurch gelöst, daß

- die Einfülleinrichtung, der Füllzylinder und der Füllstutzen ortsfest zueinander angeordnet sind, und
- eine Fördereinrichtung vorgesehen ist, die die Einfülleinrichtung mit dem Füllzylinder derart verbindet, daß die Masse von der Einfülleinrichtung in den Füllzylinder gefördert wird, wenn sich der Kolben im wesentlichen in seiner Endstellung befindet oder sich dorthin bewegt.

Mit Hilfe der Erfindung treten nennenswerte Verlustzeiten für die Befüllung nicht mehr auf, da ein Zylinderwechsel entfällt. Außerdem sind wesentlich bessere verfahrenstechnische Ergebnisse als bei den bekannten Anlagen erzielbar, da erfindungsgemäß nur ein einziger stationärer Füllzylinder verwendet wird, der in geeigneter Weise mit Hilfe der Fördereinrichtung automatisch beladen wird. Damit werden Lufteinschlüsse, wie sie beim Wechseln der Füllzylinder im Stand der Technik entstehen konnten, ausgeschlossen. Nur mit Hilfe der Erfindung ist es möglich, von der Phase der Unterdruckbehandlung (Vakuumierung) der Masse während und/oder nach dem Einfüllen direkt auf den Überdruckzustand zum Auspressen der Masse aus dem Füllstutzen mit Hilfe des Kolbens überzugehen. Die Erfindung eignet sich daher insbesondere für schmierempfindliches Brät aller Art. Aufgrund der laufenden Nachförderung von Masse mit Hilfe der erfindungsgemäßen Fördereinrichtung entstehen auch keine wesentlichen, nicht abfüllbaren Restmengen. Durch Verwendung eines einzigen Füllzylinders gestaltet sich der Sortenwechsel und die Reinigung verhältnismäßig einfach. Ein weiterer Vorteil der Erfindung besteht in dem relativ kompakten Aufbau sowie in den geringen Herstellungskosten, so daß die erfindungsgemäße Abfüllvorrichtung, insbesondere für kleinere Betriebe interessant ist.

Bei Vorrichtungen, in denen die Masse am ersten Ende des Füllzylinders in diesen einfüllbar ist, sollte vorzugsweise die Fördereinrichtung die Einfülleinrichtung mit dem ersten Ende des Füllzylinders derart verbinden, daß die Masse von der Einfülleinrichtung an dem sich in der Endstellung befindlichen Kolben vorbei in den Füllzylinder gefördert wird. Diese Ausführung ist deswegen besonders zweckmäßig, da das erste Ende, an dem der Kolben in den Füllzylinder geführt wird, gleichzeitig auch zum Befüllen des Füllzylinders verwendet wird.

Damit die gesamte Vorrichtung eine kompakte und ggf. auch transportable Einheit bildet, sollten die Einfülleinrichtung, die Fördereinrichtung, der Füllzylinder und der Füllstutzen gemeinsam an einem Maschinengestell angeordnet sein.

Bei einer weiteren Ausführung weist die Fördereinrichtung eine auf den Füllzylinder gerichtete, rotierbar angeordnete Zuführschnecke auf. Eine derartige Förderschnecke eignet sich für eine besonders schonende Förderung der Masse von der Einfülleinrichtung zum Füllzylinder.

Die Zuführschnecke kann in einem Winkel zur Achse des Füllzylinders angeordnet sein. Diese Anordnung ist insbesondere dann von Vorteil, wenn die Beschickung durch das erste Ende des Füllzylinders von hinten erfolgt, da sich die Zuführschnecke im wesentlichen in den Rückraum der Vorrichtung erstreckt, der ohnehin für den Kolben und seinen Antrieb benötigt wird.

Alternativ hierzu kann die Zuführschnecke im wesentlichen mit dem Füllzylinder fluchten und einen zumindest zum Füllzylinder hin offenen Hohlraum enthalten, innerhalb dessen der Kolben bewegbar angeordnet ist. Diese Ausführung ist insofern besonders vorteilhaft, als sie das Streben nach baulicher Kompaktheit mit dem verfahrenstechnischen Vorteil einer möglichst geradlinigen Strömung der Masse, d.h. mit minimierten Umlenkungen und damit geringsten mechanischen Belastungen für das Füllgut, vereint.

Zweckmäßigerweise sind die Zuführschnecke und der Kolben konzentrisch zueinander angeordnet.

Zwischen dem Füllzylinder und der Zuführschnecke kann dabei ein am ersten Ende des Füllzylinders angesetzter Konus vorgesehen sein, dessen Innendurchmesser sich mindestens auf den Außendurchmesser der Zuführschnecke erweitert, und sich der Kolben in seiner Endstellung außerhalb des Füllzylinders in einem Abstand zu diesem befinden. Vorzugsweise ist der Kolben in seiner Endstellung im wesentlichen vollständig in den Hohlraum der Förderschnecke zurückgezogen. Mit Hilfe des Konus wird eine den Kolben umgebende ringförmige Öffnung geschaffen, durch die die von der Förderschnecke abgegebene Masse in den Füllzylinder eintreten kann.

Um ein Rückfließen der Masse in die Fördereinrichtung bei der Vorwärtsbewegung des Kolbens vollständig zu vermeiden, weist die Fördereinrichtung eine Auslaßöffnung auf, die bei Bewegung des Kolbens aus seiner Endstellung in den Füllzylinder von einem Verschlußorgan geschlossen wird.

Als Verschlußorgan kann eine koaxial zum Füllzylinder angeordnete und in dessen Längsrichtung bewegbare Hülse vorgesehen sein, durch die der Kolben hindurchbewegbar ist. Wenn der Kolben koaxial zum Füllzylinder angeordnet ist und der Außendurchmesser im wesentlichen dem Innendurchmesser des Zylinders entspricht, kann alternativ der Kolben mit einem länglichen zylindrischen Körper versehen sein, dessen Länge so bemessen ist, daß er als Verschlußorgan wirkt, wenn der Kolben aus seiner Endstellung in den Füllzylinder hineinbewegt wird. Diese beiden zuvor genannten Ausführungsbeispiele eines Verschlußorgans zeichnen sich durch ihre besonders einfache Konstruktion aus.

Das Beschicken des Füllzylinders mit Masse ist insbesondere dann besonders einfach, wenn er währenddessen unter Unterdruck gesetzt wird.

Vorzugsweise weist die Einfülleinrichtung einen Vorratstrichter auf, der von einem Deckel verschließbar ist und in dem nach Schließen des Deckels ein Unterdruck erzeugt wird, um die Masse zu entlüften.

Zur Steuerung des Abfüllens kann der Füllstutzen von einem Auslaßschieber verschließbar sein.

Nachfolgend werden bevorzugte Ausführungsbeispiele der Erfindung anhand der beiliegenden Zeichnungen näher erläutert.

Es zeigen:

Fig. 1    die Prinzipskizze einer ersten Ausführung einer Abfüllvorrichtung im Querschnitt;

Fig. 2    die Prinzipskizze einer zweiten Ausführung im Querschnitt; und

Fig. 3    die Prinzipskizze einer dritten Ausführung im Querschnitt.

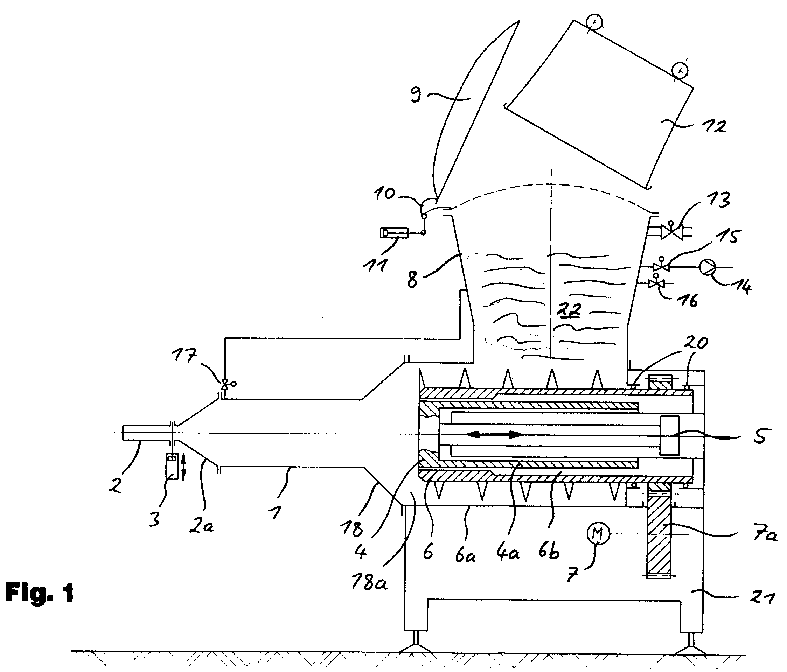

In Fig. 1 ist ein erstes Ausführungsbeispiel einer Abfüllvorrichtung schematisch im Querschnitt dargestellt. Mit Hilfe der dargestellten Abfüllvorrichtung sollen Wurst- und Fleischmassen und insbesondere schmierempfindliches Brät abgefüllt werden.

Die Abfüllvorrichtung enthält einen Füllzylinder 1, welcher in der dargestellten Ausführung waagerecht angeordnet ist. Der Füllzylinder 1 ist zu seinen beiden Stirnseiten hin offen. An der gemäß Fig. 1 linken Stirnseite ist ein Konus 2a angesetzt, der den Innenquerschnitt des Füllzylinders 1 auf einen kleineren Querschnitt verjüngt und an dem ein Füllstutzen angeordnet schnitt des Füllzylinders 1 auf einen kleineren Querschnitt verjüngt und an dem ein Füllstutzen angeordnet ist. Der Füllstutzen ist mit einem Auslaßschieber 3 verschließbar.

An der dem Füllstutzen 2 gegenüberliegenden Seite des Füllzylinders 1 ist ein Kolben 4 angeordnet, der von einem Hydraulikantrieb 5 durch die dem Füllstutzen 2 gegenüberliegende, gemäß Fig. 1 rechte offene Stirnseite des Füllzylinders 1 in diesen hineinbewegbar ist. In Fig. 1 ist der Kolben 4 in seiner Endstellung außerhalb des Füllzylinders 1 dargestellt. Am Kolben 4 ist ein zylindrischer Körper 4a angeformt, der denselben Außendurchmesser wie der Kolben 4 besitzt.

Zur Beschickung des Füllzylinders 1 mit Brät ist eine Zuführschnecke 6 vorgesehen, die innerhalb eines Schneckengehäuses 6a an Lagern 20 drehbar gelagert ist. Die Zuführschnecke 6 weist einen zylindrischen Hohlkörper auf, der zu seinen beiden Stirnseiten hin offen ist. Innerhalb des so gebildeten Hohlraums 6b der Zuführschnecke 6 ist der Kolben 4 angeordnet, wie Fig. 1 erkennen läßt.

Während die Zuführschnecke 6 in Längsrichtung unverschiebbar gelagert ist, ist der Kolben 4 aus der hohlen Zuführschnecke 6 heraus in den Füllzylinder 1 mit Hilfe des Hydraulik-Antriebes 5 verfahrbar. Daher darf der Durchmesser des Hohlraums 6b in der Zuführschnecke 6 nicht kleiner als der Außendurchmesser des Kolbens 4 und des zylindrischen Körpers 4a sein.

Wie ferner Fig. 1 erkennen läßt, liegen der Füllzylinder 1, der Füllstutzen 2, der Kolben 4 mit seinem zylindri-Kolben 4 mit dem zylindrischen Körper 4a konzentrisch zueinander angeordnet sind. Der Außendurchmesser des Kolbens 4 entspricht im wesentlichen dem Innendurchmesser des Füllzylinders 1. Da der Außendurchmesser der Zuführschnecke 6 und somit der Innendurchmesser des Schneckengehäuses 6a wesentlich größer als der Innendurchmesser des Füllzylinders 1 ist, ist der Füllzylinder 1 über einen Konus 18 am Schneckengehäuse 6a angesetzt, um einen Übergang vom kleineren Innendurchmesser des Füllzylinders 1 zum größeren Innendurchmesser des Schneckengehäuses 6a zu schaffen. Dabei wird eine ringförmige Öffnung 18a am Übergang zwischen dem Konus 18 und dem Schneckengehäuse 6a zwischen diesem und der Zuführschnecke 6 gebildet. Diese Öffnung 18a dient als Auslaßöffnung für das Schneckengehäuse 6a bzw. Einlaßöffnung für den Füllzylinder 1.

Zum Antrieb der Zuführschnecke 6 ist ein Motor 7 vorgesehen, dessen Rotorwelle über ein Zahnradgetriebe 7a mit der Zuführschnecke 6 gekoppelt ist.

An der Oberseite öffnet sich das Schneckengehäuse 6a zu einem darauf sitzenden Vorratstrichter 8, der von einem Deckel 9 verschließbar ist, welcher über ein Scharnier 10 am Oberteil des Vorratstrichters 8 angelenkt ist. Zum Öffnen und Schließen des Deckels 9 ist ein entsprechender Antrieb 11 vorgesehen. Gefüllt wird der Vorratstrichter 8 aus einem Brätwagen 12, der in Fig. 1 in umgekippter Stellung bei geöffnetem Deckel 9 dargestellt ist. Das Brät kann aber auch über ein Einlaßventil 13 in den Vorratstrichter 8 eingeleitet werden. Eine Vakuumpumpe 14 ist über ein Vakuumventil 15 mit dem Innenraum des Vorratstrichters 8 verbunden. Ebenfalls ist am Vorratstrichter 8 ein Belüftungsventil 16 vorgesehen.
des Vorratstrichters 8 verbunden. Ebenfalls ist am Vorratstrichter 8 ein Belüftungsventil 16 vorgesehen.

Außerdem ist ein Entlüftungsventil 17 am Füllzylinder 1 vorgesehen, und zwar an dessen zum Konus 2a benachbarten Ende.

Wie aus der vorhergehenden Beschreibung und aus Fig. 1 zu entnehmen ist, bilden der Füllzylinder 1, der Füllstutzen 2, der Konus 18, das Schneckengehäuse 6a und der Trichter 8 im wesentlichen eine bauliche Einheit, die auf einem Maschinengestell 21 montiert ist. Demnach sind der Füllzylinder 1, der Füllstutzen 2, der Kolben 4, die Zuführschnecke 6 und der Trichter 8 ortsfest zueinander angeordnet, wobei allerdings der Kolben 4 - wie zuvor beschrieben wurde - in Längsrichtung des Füllzylinders 2 reziprok bewegbar ist.

Nachfolgend wird die Arbeitsweise der in Fig. 1 dargestellten Abfüllvorrichtung beschrieben.

Bei geschlossenem Deckel 9 herrscht im Vorratstrichter 8 ein Unterdruck, der durch die Vakuumpumpe 14 bei geöffnetem Vakuumventil 15 erzeugt wird.

Der Vorratstrichter 8 kann nun mit dem abzufüllenden Brät 22 dadurch befüllt werden, daß es durch das Einlaßventil 13 aufgrund des im Innenraum des Vorratstrichters 8 herrschenden Unterdrucks eingesaugt wird.

Alternativ kann die Befüllung aber auch aus einem Behälter oder einem Brätwagen 12 erfolgen, wie in Fig. 1 angedeutet ist. Hierfür wird der Unterdruck im Vorratstrichter 8 beseitigt, indem das Vakuumventil 15 geschlossen und das Belüftungsventil 16 geöffnet wird. Nach dem Druckausgleich des Innenraums des Vorratstrichters 8 mit der umgebenenden Atmosphäre wird der Deckel 9 mittels des Antriebes 11 am Deckelscharnier 10 aufgeschwenkt. Das Brät 22 wird nun vom umgekippten Brätwagen 12 in den Vorratstrichter 8 geschüttet. Anschließend wird der Deckel 9 wieder geschlossen und der Innenraum des Vorratstrichters 8 nach Öffnen des Vakuumventils 15 und Schließen des Belüftungsventils 16 mit Hilfe der Vakuumpumpe 14 unter Unterdruck gesetzt.

Das im Vorratstrichter 8 unter Unterdruck stehende Brät 22 gelangt durch Schwerkrafteinfluß in die Schneckengänge der darunterliegenden Zuführschnecke 6. Die Rotationsbewegung der im Maschinengestell 21 in den Lagern 20 gehaltenen Zuführschnecke 6 wird durch den Motor 7 eingeleitet und bewirkt, daß das Brät in Richtung des Konus 18 gefördert, durch die ringförmige Öffnung 18a in diesen eingeführt und weiter durch diesen in den Füllzylinder 1 gedrückt wird. Während dieser Befüllphase ist das Entlüftungsventil 17 am Füllzylinder 1 geöffnet, so daß der Füllzylinder 1 mit dem Vorratstrichter 8 gemeinsam unter Unterdruck steht. Hierdurch ist eine schonende Förderung des Brätes möglich, da nur noch die Reibungskräfte im Füllzylinder 1 zu überwinden sind.

Während der gesamten Befüllphase bleibt der Füllstutzen 2 durch den Auslaßschieber 3 geschlossen. Nach Beendigung der Befüllphase wird das Entlüftungsventil 17 geschlossen. Das in dem geschlossenen Raum, gebildet durch den geschlossenen Auslaßschieber 3, den Füllzylinder 1 und den Kolben 4, befindliche Brät wird nun durch eine Vorwärtsbewegung des Kolbens 4 aus seiner in Fig. 1 gezeigten Endstellung in den Füllzylinder 1 mit Hilfe des Hydraulik-Antriebes 5 auf einen vorgewählten Druck verdichtet.

Anschließend folgt das eigentliche Abfüllen, indem das Brät nach Öffnung des Auslaßschiebers 3 durch den Kolben 4 in den Füllstutzen 2 und aus diesem herausgepreßt wird.

Während der Vorwärtsbewegung des Kolbens 4 wird die ringförmige Öffnung 18a von dem am Kolben 4 angesetzten zylindrischen Körper 4a geschlossen, indem der zylindrische Körper 4a den Füllzylinder 1 mit der Zuführschnecke 6 verbindet. Dabei ist die Länge des zylindrischen Körpers 4a so bemessen, daß er auch dann noch sich mit seinem hinteren (gemäß Fig. 1 rechten) Ende innerhalb der Zuführschnecke 6 befindet und somit die ringförmige Öffnung 18a zu den Schneckengängen an der Außenseite der Zuführschnecke 6 verschließt, wenn der Kolben 4 seine vorderste Position innerhalb des Füllzylinders 1 am Konus 2a erreicht hat.

Nachdem der Kolben 4 seine vorderste Position erreicht hat, wird der Auslaßschieber 3 geschlossen. Anschließend erfolgt der Rückhub des Kolbens 4, bis dieser seine in die Zuführschnecke 6 zurückgezogene Endstellung wieder erreicht. Eine erneute Befüllung des Füllzylinders 1 in der zuvor beschriebenen Weise kann dann wieder durchgeführt werden.

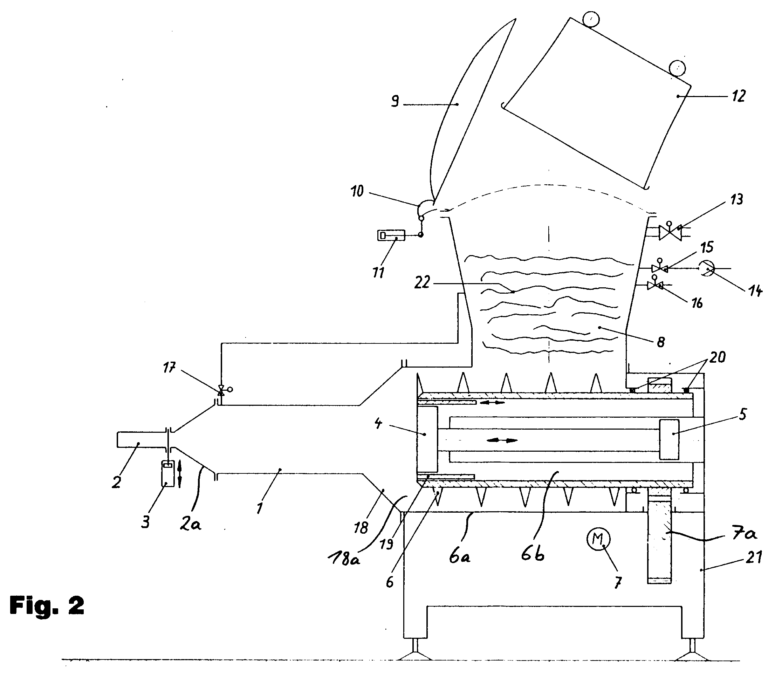

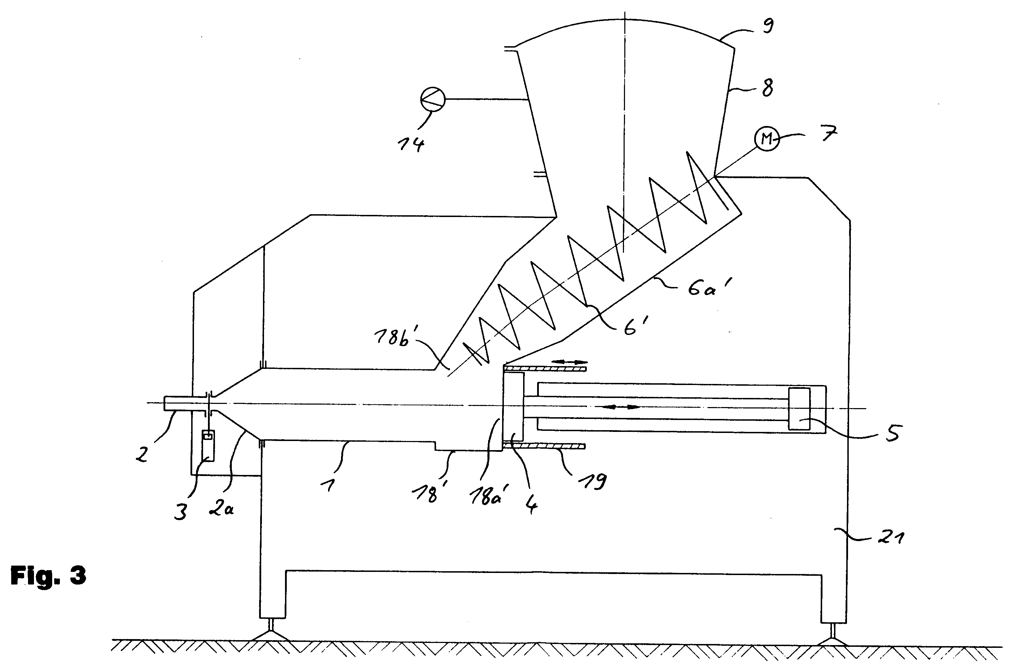

In den Fig. 2 und 3 sind weitere Ausführungen dargestellt, wobei für die gleichen Elemente die gleichen Bezugzeichen verwendet werden.

Die in Fig. 2 dargestellte Ausführung unterscheidet sich von der Ausführung gemäß Fig. 1 dadurch, daß der Kolben 4 keinen zylindrischen Körper 4a aufweist und zwischen Kolben 4 und Innenseite der Zuführschnecke 6 in deren Hohlraum 6b ein hülsenförmiges Verschlußelement 19 konzentrisch angeordnet ist. In Fig. 2 ist das Verschlußelement 19 in seiner Endstellung dargestellt, in der es vollständig in den Hohlraum 6b der Zuführschnecke 6 zurückgezogen ist. Nach der Befüllung des Füllzylinders 1 wird das hülsenförmige Verschlußorgan 19 aus der in Fig. 2 gezeichneten Stellung in den Konus 18 bewegt und bildet eine Verlängerung des Füllzylinders 1 bis zur Zuführschnecke 6 und somit zum in der Endstellung stehenden Kolben 4. Dadurch wird die ringförmige Öffnung 18a zu den Schneckengängen verschlossen, um ein Rückfließen des Brätes aus dem Füllzylinder 1 in die Zuführschnecke 6 bei der ersten Vorwärtsbewegung des Kolbens 4 vollständig zu vermeiden.

Die in Fig. 3 gezeigte Ausführung unterscheidet sich von der Ausführung gemäß Fig. 2 dadurch, daß die Zuführschnecke nicht konzentrisch zum Kolben 4, sondern unter einem Winkel zur Achse des Füllzylinders 1 angeordnet ist. An das dem Füllstutzen 2 gegenüberliegende Ende des Füllzylinders 1 ist eine Verlängerung 18' angesetzt, welche eine erste Öffnung 18a' für den Kolben 4 und das hülsenförmige Verschlußorgan 19 und eine seitliche Öffnung 18b' für die Zuführschnecke 6' aufweist. Wie die Zuführschnecke 6' erstreckt sich auch das zugehörige Schneckengehäuse 6a' im gleichen Winkel zur Achse des Füllzylinders 1, und zwar nach hinten oberhalb des in seiner Endstellung befindlichen Kolbens 4. Die Beschickung von hinten hat den Vorteil, daß sich die Zuführschnecke 6 mit ihrem Schneckengehäuse 6a' in den Rückraum erstreckt, der ohnehin für den Kolben 4 und dessen Hydraulik-Antrieb 5 benötigt wird.

Bei dieser Ausführung kann das hülsenförmige Verschlußorgan 19 auch alternativ in der Verlängerung 18' in Längsrichtung unverschiebbar, jedoch drehbar angeordnet sein und eine Öffnung enthalten, die zum Befüllen des Füllzylinders 1 in fluchtende Anordnung mit der seitlichen Öffnung 18b' gebracht wird, während zum Abfüllen das hülsenförmige Verschlußorgan entsprechend gedreht wird, wodurch die seitliche Öffnung 18b' von der Wandung des Verschlußorgans verschlossen wird.

**Patentansprüche**

1. Vorrichtung zum Abfüllen von Massen, insbesondere Wurst- und Fleischmassen, mit

- einer Einfülleinrichtung (8) zum Einfüllen der Masse (22),
- einem Füllzylinder (1), der mit Masse (22) von der Einfülleinrichtung (8) her beschickbar ist,
- einem Füllstutzen (2) zur Abgabe der Masse, und mit
- einem Kolben (4), der aus einer Endstellung vom ersten Ende des Füllzylinders (1) her in diesen hineinbewegbar ist, um die Masse aus dem zweiten Ende des Füllzylinders (1) durch den Füllstutzen (2) herauszudrücken,

dadurch gekennzeichnet, daß

- die Einfülleinrichtung (8), der Füllzylinder (1) und der Füllstutzen (2) ortsfest zueinander angeordnet sind, und
- eine Fördereinrichtung (6; 6') vorgesehen ist, die die Einfülleinrichtung (8) mit dem Füllzylinder (1) derart verbindet, daß die Masse (22) von der Einfülleinrichtung (8) in den Füllzylinder (1) gefördert wird, wenn sich der Kolben (4) im wesentlichen in seiner Endstellung befindet oder sich dorthin bewegt.

2. Vorrichtung nach Anspruch 1, bei welcher die Masse am ersten Ende des Füllzylinders (1) in diesen einfüllbar ist, dadurch gekennzeichnet, daß die Fördereinrichtung (6; 6') die Einfülleinrichtung (8) mit dem ersten Ende des Füllzylinders (1) derart verbindet, daß die Masse (22) von der Einfülleinrichtung (8) an dem sich in der Endstellung befindlichen Kolben (4) vorbei in den Füllzylinder (1) gefördert wird.

3. Vorrichtung nach Anspruch 1 oder 2, dadurch gekennzeichnet, daß die Einfülleinrichtung (8), die Fördereinrichtung (6; 6'), der Füllzylinder (1) und der Füllstutzen (2) gemeinsam an einem Maschinengestell (21) angeordnet sind.

4. Vorrichtung nach einem der Ansprüche 1 bis 3, dadurch gekennzeichnet, daß die Fördereinrichtung eine auf den Füllzylinder (1) gerichtete, rotierbar angeordnete Zuführschnecke (6; 6') aufweist.

5. Vorrichtung nach Anspruch 4, dadurch gekennzeichnet, daß die Zuführschnecke (6') in einem Winkel zur Achse des Füllzylinders (1) angeordnet ist.

6. Vorrichtung nach mindestens einem der Ansprüche 1 bis 4,
dadurch gekennzeichnet, daß die Zuführschnecke (6) im wesentlichen mit dem Füllzylinder (1) fluchtet und einen zumindest zum Füllzylinder (1) hin offenen Hohlraum (6b) enthält, innerhalb dessen der Kolben (4) bewegbar angeordnet ist.

7. Vorrichtung nach Anspruch 6,
dadurch gekennzeichnet, daß die Zuführschneke (6) und der Kolben (4) konzentrisch zueinander angeordnet sind.

8. Vorrichtung nach Anspruch 7,
dadurch gekennzeichnet, daß zwischen dem Füllzylinder (1) und der Zuführschnecke (6) ein am ersten Ende des Füllzylinders (1) angesetzter Konus (18) vorgesehen ist, dessen Innendurchmesser sich mindestens auf den Außendurchmesser der Zuführschnecke (6) erweitert, und daß sich der Kolben (4) in seiner Endstellung außerhalb des Füllzylinders (1) in einem Abstand zu diesem befindet.

9. Vorrichtung nach Anspruch 8,
dadurch gekennzeichnet, daß der Kolben (4) in seiner Endstellung im wesentlichen vollständig in den Hohlraum (6b) der Zuführschnecke (6) zurückgezogen ist.

10. Vorrichtung nach einem der Ansprüche 1 bis 9,
dadurch gekennzeichnet, daß die Fördereinrichtung (6; 6') eine Auslaßöffnung (18a; 18b') aufweist, die bei Bewegung des Kolbens (4) aus seiner Endstellung in den Füllzylinder (1) von einem Verschlußorgan (19) geschlossen wird.

11. Vorrichtung nach Anspruch 10,
dadurch gekennzeichnet, daß als Verschlußorgan (19) eine koaxial zum Füllzylinder (1) angeordnete und in dessen Längsrichtung bewegbare Hülse vorgesehen ist, durch die der Kolben (4) hindurchbewegbar ist.

12. Vorrichtung nach Anspruch 10, bei welcher der Kolben (4) koaxial zum Füllzylinder (1) angeordnet ist und der Außendurchmesser des Kolbens (4) im wesentlichen dem Innendurchmesser des Füllzylinders (1) entspricht, dadurch gekennzeichnet, daß der Kolben (4) mit einem länglichen zylindrischen Körper (4a) versehen ist, dessen Länge so bemessen ist, daß er als Verschlußorgan wirkt, wenn der Kolben aus seiner Endstellung in den Füllzylinder (1) hineinbewegt wird.

13. Vorrichtung nach einem der Ansprüche 1 bis 12,
dadurch gekennzeichnet, daß der Füllzylinder (1) während des Beschickens mit Masse unter Unterdruck gesetzt wird.

14. Vorrichtung nach einem der Ansprüche 1 bis 13,
dadurch gekennzeichnet, daß in der Einfülleinrichtung (8) ein Unterdruck erzeugbar ist.

15. Vorrichtung nach Anspruch 14,
dadurch gekennzeichnet, daß die Einfülleinrichtung einen Vorratstrichter (8) aufweist, der von einem Deckel (9) verschließbar ist und in dem nach Schließen des Deckels (9) ein Unterdruck erzeugt wird.

16. Vorrichtung nach einem der Ansprüche 1 bis 15,
dadurch gekennzeichnet, daß der Füllstutzen (2) von einem Auslaßschieber (3) verschließbar ist.

Fig. 1

**Fig. 2**

EP 0 484 705 A1

**Fig. 3**

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | SU-A-862 885 (LENINGRAD MEAT DAIRY)<br><br>zusammenfassung<br>* Abbildung *<br>--- | 1-5,6,7, 12 | A22C11/08 |
| A | FR-A-2 069 723 (JAVALOY J.)<br><br>* Seite 3, Zeile 29 - Seite 5, Zeile 1; Abbildungen 1-7 *<br>--- | 1-3,4,8, 12 | |
| D,A | FR-A-2 415 575 (VEB KOMBINAT NAGEMA)<br><br>* Seite 2, Zeile 35 - Seite 3, Zeile 20; Abbildungen 1,2 *<br>--- | 1-3,5,8, 12,16 | |
| A | US-A-3 147 784 (SLOAN E.)<br>* Spalte 1, Zeile 70 - Spalte 3, Zeile 3; Abbildungen 1,2 *<br><br>----- | 13,14 | |

**RECHERCHIERTE SACHGEBIETE (Int. Cl.5 )**

A22C

Der vorliegende Recherchenbericht wurde für alle Patentansprüche erstellt

| Recherchenort | Abschlußdatum der Recherche | Prüfer |
|---|---|---|
| DEN HAAG | 19 FEBRUAR 1992 | ELSWORTH D. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)